# EUROPEAN PATENT SPECIFICATION

(11) **EP 1 048 455 B1**
(45) Date of publication and mention of the grant of the patent: **25.09.2002**
(21) Application number: 99303011.3
(22) Date of filing: 19.04.1999
(51) Int. Cl.: B32B 31/00, B32B 27/32, B65D 75/30

(54) **Use of a multilayer film including a layer of cast polypropylene for covering a flat object to be protected**
Verwendung eines eine nicht orientierte Schicht aus Polypropylen enthaltenden mehrschichtigen Films zum Überziehen eines zuschützenden flachen Gebildes
Utilisation d'un film multicouche comprenant une couche de polypropylène non-orienté pour recouvrir un objet plat à protéger

(43) Date of publication of application: 02.11.2000
(73) Proprietor: Fujipla Inc., Tokyo 104-0061 (JP); DORNED B.V., NL-1016 AX Amsterdam (NL)
(72) Inventor: Terai, Akio, Hasuda, Saitama 349-0104 (JP); Suzuki, Hisashi, Yamato, Kanagawa 242-0007 (JP); Kawashima, Noriyuki, Saitama 362-0045 (JP)
(74) Representative: Rackham, Stephen Neil

(56) References cited:
- EP-A- 0 659 551
- DE-A- 3 431 364
- GB-A- 1 360 725
- US-A- 2 179 884
- US-A- 3 620 825
- US-A- 4 497 679
- US-A- 5 139 136
- US-A- 5 387 449
- DATABASE WPI Section Ch, Week 9130 Derwent Publications Ltd., London, GB; Class A97, AN 91-219724 XP002113294 & JP 03 142231 A (GREEN CROSS CORP), 18 June 1991 (1991-06-18)
- PATENT ABSTRACTS OF JAPAN vol. 016, no. 557 (M-1340), 27 November 1992 (1992-11-27) & JP 04 211981 A (TORAY IND INC), 3 August 1992 (1992-08-03)
- DATABASE WPI Section Ch, Week 9248 Derwent Publications Ltd., London, GB; Class A17, AN 92-394772 XP002113295 & JP 04 294140 A (TOPPAN PRINTING CO LTD), 19 October 1992 (1992-10-19)
- DATABASE WPI Section Ch, Week 9406 Derwent Publications Ltd., London, GB; Class A23, AN 94-045326 XP002113296 & JP 06 000911 A (TOYOBO KK), 11 January 1994 (1994-01-11)
- PATENT ABSTRACTS OF JAPAN vol. 099, no. 002, 26 February 1999 (1999-02-26) & JP 10 305539 A (FUJIPURA KK), 17 November 1998 (1998-11-17)
- DATABASE WPI Section Ch, Week 9003 Derwent Publications Ltd., London, GB; Class A17, AN 90-019249 XP002113297 & JP 01 299037 A (FUJI XEROX CO LTD), 1 December 1989 (1989-12-01)

## Description

This invention relates to methods for producing a plastic laminate that hermetically confines an object, such as a rare coin particularly an ancient coin, a rare bank note particularly an old bank note and a textile sample with a film predominantly made of a transparent-plastic material, such that the object may be removed from the plastic laminate at a later time without being harmed.

A transparent plastic laminate which covers or sandwiches a descriptive information-carrying medium such as a card presenting the name or the title of an individual and a pictorial information-carrying medium such as a photograph of the individual, between transparent plastic films for protecting the information-carrying media from mechanical and/or chemical hazard, is available in the prior art. The transparent plastic laminate can be employed as an ID card, an employee certificate or the page of a passport. Since such an article is designed to provide security, its degree of resistance against forgery is one of the most important properties of the article. For example, such a transparent platic laminate can be forged by replacing the original information-carrying card with a forgery after exfoliating the transparent plastic film from the original card and/or photograph, if the transparent plastic film can be exfoliated from the original card and/or a photograph without harming them.

Accordingly, the magnitude of adhesion of the adhesive employed for adhering the transparent plastic film to the card and/or the photograph must be large enough to destroy the card and/or the photograph, in the event that a forger attempts to exfoliate the transparent plastic film from the card and/or the photograph. To meet this requirement, the method for producing the transparent plastic laminate available in the prior art includes a step for bonding a film of polyethylene, ethylene ethyl acrylate or ethylene vinyl acetate to a film of oriented polypropylene or polyethylene terephthalate with a thermal adhesive, a step for placing the film of an oriented polypropylene or polyethylene terephthalate on which the film of polyethylene, ethylene ethyl acrylate or ethylene vinyl acetate is bonded, on an object to be laminated, such as a card and/or a photograph, and a step for heating and pressing their entire surface to heat-seal them to one another.

It should be noted that it is known that a plastic film such as a polypropylene film is usually applied an orientation process to enhance the mechanical strength thereof, when it is employed as a wrapping material for example. Incidentally, it is known that an oriented polypropylene film is not capable of heat-sealing and it can not stick to other materials by a heat-sealing process. Further, an orientation process is not effective to ethylene / ethyl acrylate or to ethylene vinyl acetate copolymers, and thus an orientation process is not applied to these materials.

Referring now to the drawings, each of two methods for producing the foregoing plastic laminate available in the prior art, will be described below.

### Dry Laminating Process

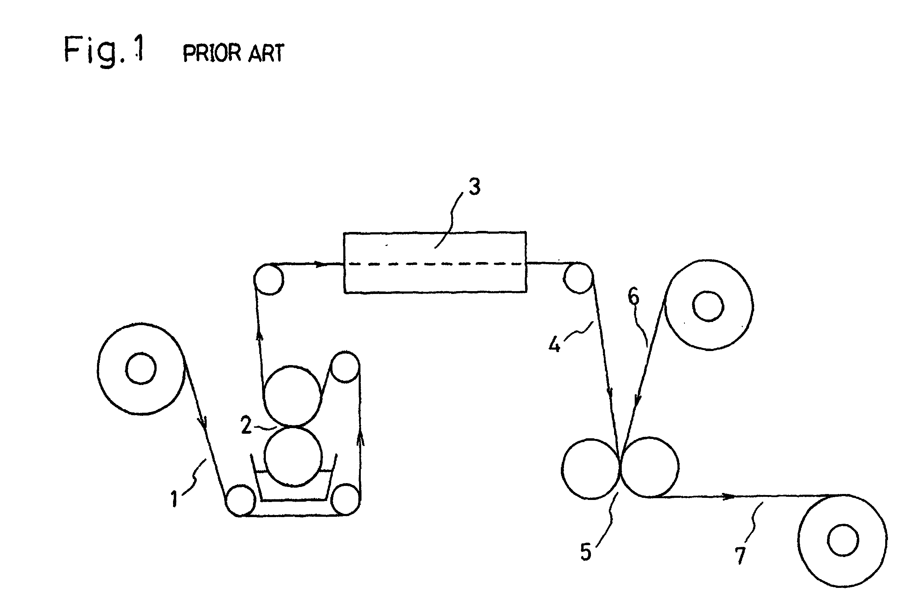

Referring to Fig. 1, a transparent plastic film 1 made of an oriented polypropylene or polyethylene terephthalate is payed off toward a thermo-adhesive applying apparatus 2, in which a thermal adhesive, such as an imine adhesive, an isocyanide adhesive or a urethane adhesive is applied to one surface of the transparent plastic film 1. Thereafter, a dryer 3 is employed to evaporate a solvent from the adhesive and fix the thermal adhesive on the transparent plastic film 1. In this manner, a transparent plastic film 4 having a film of a thermal adhesive on one surface is produced. A pair of rollers 5 is employed to adhere the film 4 to a film 6 of thermoplastic resin, such as polyethylene, ethylene/ethyl acrylate copolymer or ethylene/vinyl acetate copolymer by way of the thermal adhesive on the film 4. In this manner, a lamination 7 of the transparent plastic film 1 attached to the film 6 of the thermoplastic resin, is produced.

In this dry laminating process, the thermoplastic resin film 6 (the film of polyethylene, ethylene/ethyl acrylate or ethylene/vinyl acetate copolymer) is a solid film. In other words, the thermoplastic resin film 6 is the one sold in the marketplace as a material useful for wrapping. As was described above, since neither ethylene/ethyl acrylate nor ethylene/vinyl acetate copolymer provides increased mechanical strength by application of an orientation process, the films of ethylene/ethyl acrylate and ethylene/vinyl acetate copolymers sold in the marketplace are generally of cast ethylene ethyl acrylate (a film of ethylene/ethyl acrylate copolymer as cast) or cast ethylene vinyl acetate (a film of ethylene/vinyl acetate copolymer as cast). In addition, as was described above, since an oriented polypropylene does not have a heat-sealing property, oriented polypropylene can not be employed as a material for the thermoplastic resin film 6.

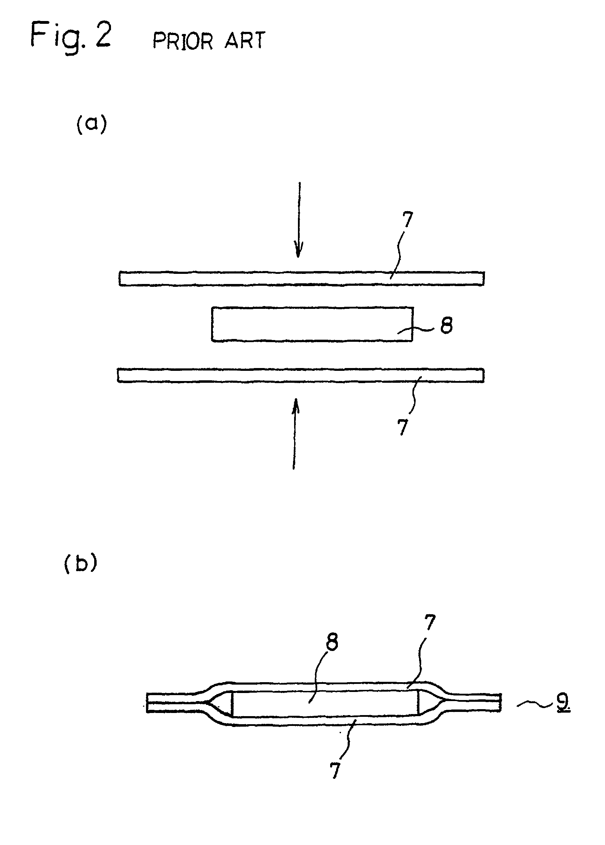

Referring to Figs. 2(a) and 2(b), upper and lower surfaces of an object 8 to be laminated, which actually is a medium carrying descriptive information or a medium carrying pictorial information, are covered by the film 7 comprising a transparent plastic film 1 attached by the film 6 of a thermoplastic resin. It is important that the thermoplastic resin films face the inside (i.e. the object 8 to be laminated). In this manner, a combination of the object 8 to be laminated and the transparent plastic films 7 each of which is attached by a film 6 of a thermoplastic resin, is produced, as is shown in Fig. 2(a). A laminating apparatus e.g. Model LPD3204 made by FUJIPLA Inc. of Japan is employed to heat and press the combination of the object 8 to be laminated and the transparent plastic films 7 each of which is attached by a film 6 of a thermoplastic resin, at 153°C to produce a laminate 9 shown in Fig. 2(b). In this heating and pressing process, the thermoplastic resin film 6 acts as an adhesive for adhering the transparent plastic films 7 each of which is attached by a film 6 of a thermoplastic resin and the object 8 to be laminated.

### Extrusion Laminating Process

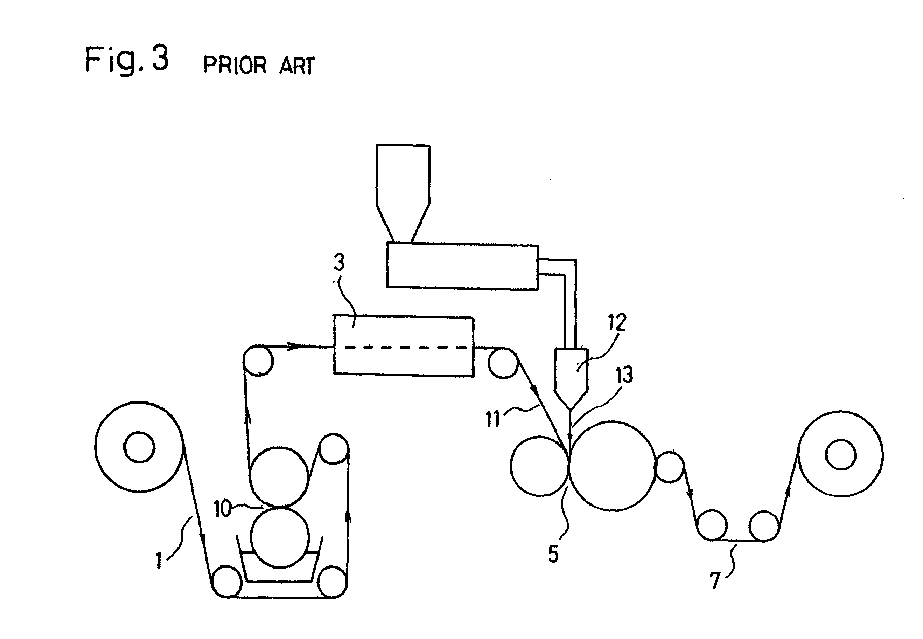

Referring now to Fig. 3, a transparent plastic film 1 made of an oriented polypropylene or polyethylene terephthalate is payed off toward an anchor coating agent applying apparatus 10, in which a solution of an anchor coating agent (such as an imine anchor coating agent, an isocyanide anchor coating agent or a urethane anchor coating agent) in a solvent is applied on one surface of the transparent plastic film 1. Thereafter, a dryer 3 is employed to evaporate the solvent from the anchor coating agent and fix the anchor coating agent on the transparent plastic film 1. In this manner, a transparent plastic film 11 having an anchor coating agent on one surface thereof, is produced. A pair of rollers 5 is employed to cover the surface of the anchor coating agent with a film of a molten thermoplastic resin 13 (a molten thermoplastic resin extruded from a T-die 12) such as polyethylene, ethylene/ethyl acrylate or ethylene/vinyl acetate copolymer. The molten thermoplastic resin is quickly cooled and hardened. In this manner, a transparent plastic film 7 attached by a film of a thermoplastic resin, is produced.

In this extrusion-laminating process, the solid thermoplastic resin film (the film of polyethylene, ethylene/ethyl acrylate or ethylene/vinyl acetate) is formed by hardening the molten thermoplastic resin film 13. In other words, the thermoplastic resin starting material employed in this process is a powder or particles of polyethylene, ethylene/ethyl acrylate or ethylene/vinyl acetate, and is not a solid film. The solid thermoplastic resin film 13 is doubtless a film of polyethylene, ethylene/ethyl acrylate or ethylene/vinyl acetate as cast. In addition, since oriented polypropylene has no heat-sealing property, none of the persons ordinarily skilled in the art would see the possibility of employing polypropylene as the material for the thermoplastic resin employed in this process, because the heat-sealing property is scheduled to be employed in a later process.

Referring again to Figs. 2(a) and 2(b), upper and lower surfaces of an object 8 to be laminated which actually is a medium carrying descriptive or pictorial information, are covered by the transparent plastic film 7 attached by a film 13 of a thermoplastic resin, with the thermoplastic resin films 13 facing the inside (i.e. the object 8 to be laminated). In this manner, a combination of the object 8 to be laminated and the transparent plastic films 7 each of which is attached by a film of a thermoplastic resin 13, is produced, as is shown in Fig. 2(a). A laminating apparatus e.g. Model LPD3204 made by FUJIPLA Inc. of Japan is employed to heat and press the combination of the object 8 to be laminated and the transparent plastic films 7 each of which is attached by a film 13 of a thermoplastic resin, at 153°C to produce a laminate 9 shown in Fig. 2(b). In this heating and pressing process, the thermoplastic resin film 13 acts as an adhesive for adhering the transparent plastic films 7 each of which is attached by a film 13 of a thermoplastic resin and the object 8 to be laminated.

EP-A-0659551, US-A-5387449 and JP-A-3142231 all disclose the manufacture of multilayer packaging material for use as bags or heat-sealed pouches, the multilayered packaging material including a layer of cast polypropylene.

A search for other uses of the foregoing plastic laminate resulted in a study of the possibilities of using the foregoing plastic multilayer film or laminate to hermetically confine an object to be laminated, the object being one which must be protected from mechanical and/or chemical hazards but which must also be removed from the laminate at a later time without being harmed, such as a rare coin particularly an ancient coin, a rare bank note particularly an old bank note or a textile sample.

Accordingly, it is an object of this invention to use a plastic multilayer film or laminate predominantly made of a transparent plastic material to hermetically cover an object such as a rare coin particularly an ancient coin, a rare bank note particularly an old bank note, a textile sample in a manner such that the object may be removed from the plastic laminate at a later time without being harmed.

This invention relies on the concept of using to advantage the heat-sealing properties of cast polypropylene or polypropylene as cast, which has a strong heat-sealing property to itself but does not have a sufficiently strong heat-sealing property between cast polypropylene and an ordinary paper, a photographic paper, metal or textile.

Applicants have discovered that cast polypropylene can be employed as the material of a thermoplastic resin film, in combination with, e.g., an oriented polypropylene or polyethylene terephthalate film which can be employed as the material of transparent plastic films which cover an object to be laminated, because cast polypropylene adheres to films of cast polypropylene but it does not sufficiently adhere to a film of an ordinary paper, a photographic paper, metal or textile.

In connection with the foregoing distinction, unsatisfactory or weak heat-sealing means that two films can be exfoliated by a force less than 100 grams per 100mm width, and strong heat-sealing means that two films can only be exfoliated by a force more than 200 grams per 100mm width.

Experimentation by applicants has shown that cast polypropylene or polypropylene as cast does not sufficiently heat-seal an oriented polypropylene or polyethylene terephthalate film to an ordinary paper, photographic paper, metal or textile.

As was described earlier, the demand for plastic laminates available in the prior art has been limited to those that prevent forgery. Thus, the substances employed to adhere the cover films (e.g., transparent plastic films) to an object to be laminated have been limited to those that provide strong adhesion between the material of the cover film, e.g. polyethylene terephthalate or oriented polypropylene and the photographic paper and/or ordinary paper. In this sense, polyethylene, ethylene/ethyl acrylate or ethylene/vinyl acetate copolymers were employed to adhere the cover films (transparent plastic films) with the object to be laminated. As a result, those of skill in the art were not interested in substances that do not heat-seal polyethylene terephthalate, or oriented polypropylene films to ordinary paper, photographic paper, metal or textiles. Thus, the applicants were required to use considerable efforts to reach the concept of this invention.

Accordingly, the present invention consists in the use of a multilayer film for covering an object having substantially flat surfaces, as defined in the appending claim.

This invention, together with its various features and advantages, can be readily understood from the following more detailed description presented in conjunction with the following drawings, in which:
Fig. 1 is a schematic drawing illustrating a process for placing a thermal adhesive film on a transparent plastic film employing a dry laminating process, for producing a plastic laminate available in the prior art,
Figs. 2(a) and 2(b) are schematic drawings illustrating, respectively, a process for placing an object to be laminated between transparent plastic films each of which is adhered by a film of a thermoplastic resin, and a process for pressing and heating a lamination of the object to be laminated covered by the transparent plastic films each of which has a film of a thermoplastic resin, for producing a plastic laminate available in the prior art,
Fig. 3 is a schematic drawing illustrating a process for placing an anchor coating agent film on a transparent plastic film employing an extrusion laminating process, for producing a plastic laminate available in the prior art,
Fig. 4 is a schematic drawing illustrating a process for placing a thermal adhesive film on a transparent plastic film employing a dry laminating process, for producing a plastic multilayer film or laminate suitable for use in the invention,
Figs. 5(a) and 5(b) are schematic drawings illustrating, respectively, a process for placing an object to be laminated between transparent multilayer plastic films each of which is adhered by a film of a thermoplastic resin, and a process for pressing and heating a lamination of the object to be laminated covered by the transparent plastic films each of which has a film of a thermoplastic resin, for producing a plastic laminate,
Fig. 6 is a schematic drawing illustrating a process for placing an anchor coating agent film on a transparent plastic film employing an extrusion laminating process, for producing a plastic multilayer film or laminate suitable for use in the present invention.

With reference to the drawings, a detailed description will be presented below of methods for producing a plastic laminate in accordance with two embodiments. The multilayer film used thereby may be prepared in different manners and is no subject of the present invention.

### First Embodiment (Dry Laminating Process)

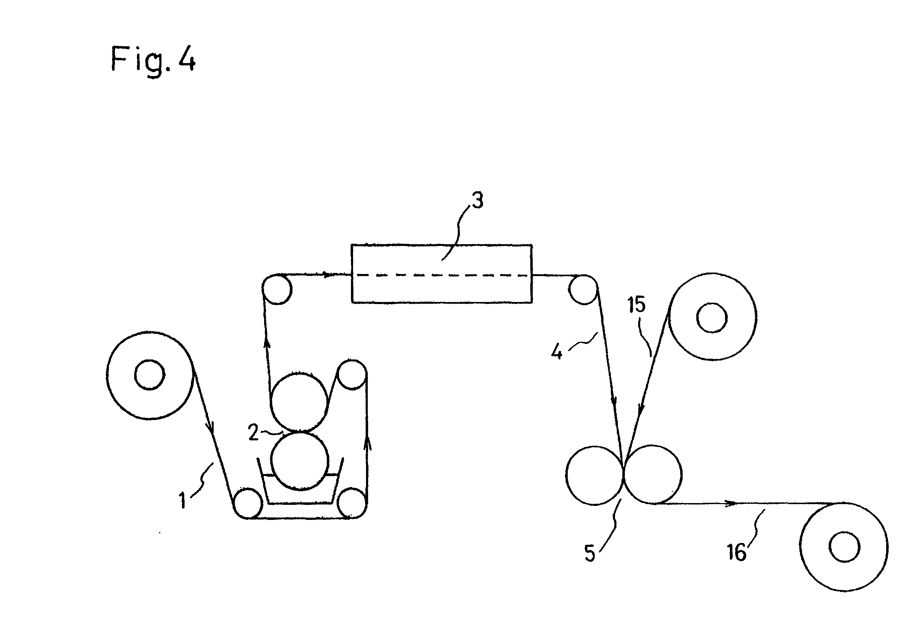

Referring now to Fig. 4, a transparent plastic film 1 made of an oriented polypropylene or polyethylene terephthalate is payed off toward a thermoadhesive applying apparatus 2, which contains a mixture of a thermal adhesive such as an imine adhesive, an isocyanide adhesive or a urethane adhesive and a solvent. The adhesive mixture is applied to one surface of the transparent plastic film 1 by passing the film between a pair of rollers, one of which is dipped in the mixture. Thereafter, a dryer 3 is employed to evaporate the solvent from the thermal adhesive and fix the thermal adhesive on the transparent plastic film 1. In this manner, a transparent plastic film having a thermal adhesive on one surface 4 is produced. A pair of rollers 5 is employed to apply a film of cast polypropylene 15 on the thermal adhesive film of the transparent plastic film having a thermal adhesive on one surface 4. The thermal adhesive adheres the transparent plastic film 1 with the cast polypropylene film 15. In this manner, a transparent plastic film attached to a film of cast polypropylene 15 is produced.

In this dry laminating process, the thermoplastic resin film 15 (the film of cast polypropylene) is a solid film. As was described above, polypropylene films employed for wrapping are not usually cast polypropylene films but are, instead, films of oriented polypropylene, in which polypropylene has been subjected to an orientation process to enhance its mechanical strength. Since oriented polypropylene has no heat-sealing property, it was not employed for this purpose in the prior art.

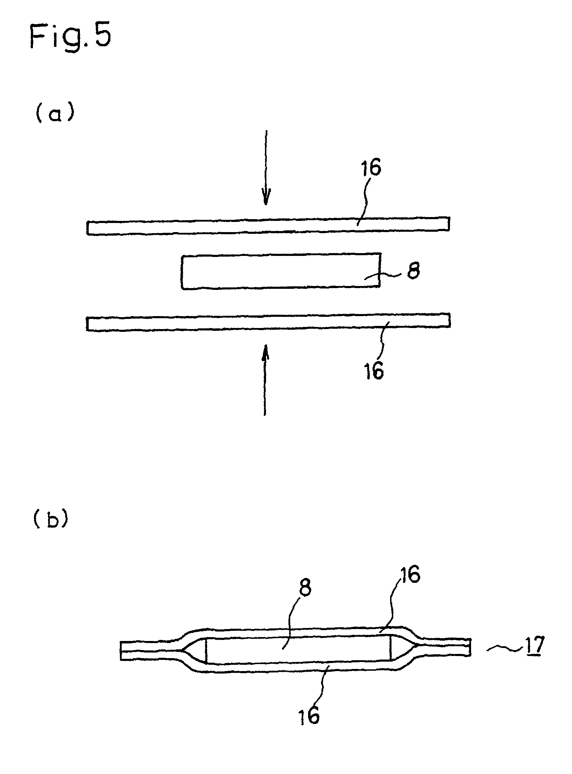

Referring to Figs. 5(a) and 5(b), upper and lower surfaces of an object 8 to be laminated which requires protection from mechanical and/or chemical hazard but must also be removed at a later time, such as a rare coin particularly an ancient coin, a rare bank note particularly an old bank note or a textile sample is covered by the transparent plastic films 16 each of which includes a film 15 of cast polypropylene. In this process, it is important to place the thermoplastic resin films 15 such that they face inward. In this manner, a combination of the object to be laminated 8 and the transparent plastic films 16 each of which includes the film of cast polypropylene 15, is produced, as is shown in Fig. 5(a). A laminating apparatus e.g. Model LPD3204 made by FUJIPLA Inc. of Japan is employed to heat and press the combination of the object to be laminated 8 and the transparent plastic films 16 each of which is the lamination of the transparent plastic film 1 and the cast polypropylene film 15, at 153 degrees C to produce a laminate 17 shown in Fig. 5(b).

Since the object to be laminated, such as an ancient coin, an old bank note or a textile sample contacts cast polypropylene which has weak adhesion for such materials, the object to be laminated such as an ancient coin, an old bank note or a textile sample can readily be removed from the plastic laminate without being harmed, despite the fact that the outer transparent plastic films of, e.g., oriented polypropylene or polyethylene terephthalate are strongly adhered each other.

### Second Embodiment (Extrusion Laminating Process)

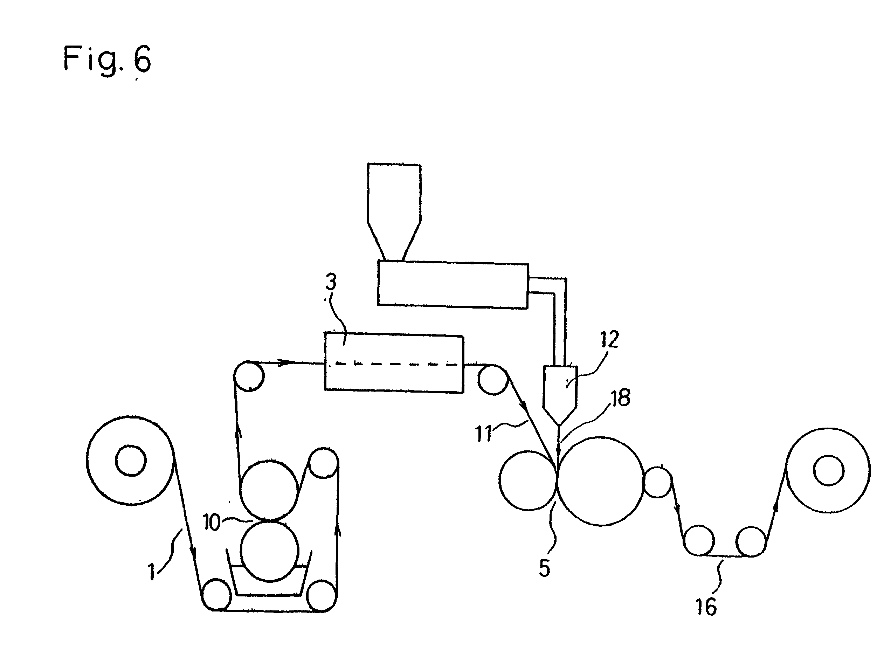

Referring now to Fig. 6, a transparent plastic film 1, e.g., made of an oriented polypropylene or polyethylene terephthalate is payed off toward an anchor coating agent applying apparatus 10, which contains a mixture of an anchor coating agent, such as an imine anchor coating agent, an isocyanide anchor coating agent or an urethane anchor coating agent, and a solvent. This mixture is applied to one surface of the transparent plastic film 1, when the transparent plastic film 1 is passed through the mixture. Thereafter, a dryer 3 is employed to evaporate the solvent from the anchor coating agent and fix the anchor coating agent on the transparent plastic film 1. In this manner, a transparent plastic film 11 having an anchor coating agent on one surface, is produced. A pair of rollers 5 is employed to coat the surface of the anchor coating agent with a film of a molten polypropylene 18 extruded from a T-die 12. The molten polypropylene is quickly cooled and hardened. In this manner, a transparent plastic film 16 which includes a film of cast polypropylene is produced.

In this extrusion laminating process, the solid film of cast polypropylene is formed by hardening the molten polypropylene film 18. In other words, the starting material for the thermoplastic resin employed in this process is a powder or particles of polypropylene, and not a solid film. As was described earlier, a polypropylene film which is usually employed for wrapping is an oriented polypropylene film. The film 18, however, can not be an oriented polypropylene film, because it is produced in one step.

Referring to Figs. 5(a) and 5(b) again, upper and lower surfaces of an object to be laminated 8 which requires protection from mechanical and/or chemical hazard but which must also be removed at a later time, such as a rare coin particularly an ancient coin, a rare bank note particularly an old bank note or a textile sample is covered by the transparent plastic films 16 each of which includes a film of cast polypropylene. In this process, it is important to place the cast polypropylene films 18 such that they face inward. In this manner, a combination of the object to be laminated 8 and the transparent plastic films 16 each of which includes the film of cast polypropylene is produced, as is shown in Fig. 5(a). A laminating apparatus e.g. Model LPD3204 made by FUJIPLA Inc. of Japan is employed to heat and press the combination of the object to be laminated 8 and the transparent plastic films 16 each of which is the lamination of the transparent plastic film 1 and the cast polypropylene film, at 153°C to produce a laminate 17 shown in Fig. 5(b).

Since the object to be laminated such as an ancient coin, old bank note or textile sample contacts cast polypropylene which has weak adhesion for such materials, the object to be laminated such as an ancient coin, old bank note or textile sample can readily be removed at a later time from the plastic laminate without being harmed, while still allowing the transparent plastic films of oriented polypropylene or polyethylene terephthalate to be strongly adhered each other.

The above description has clarified that the use of a plastic multilayer film or laminate predominantly made of a transparent plastic material which hermetically covers an object such as a rare coin particularly an ancient coin, a rare bank note particularly an old bank note, a textile sample in a manner that the object can be taken out of the plastic laminate at a later time without being harmed, has been successfully provided by this invention.

## Claims

1. The use of a multilayer film (16) for covering an object (8) having substantially flat surfaces, the multilayer film comprising a transparent plastics film (1) and a cast polypropylene film (15) joined by a thermal adhesive, wherein multilayer films (16) are adapted to be applied to respective sides of the object (8), oriented such that the films of cast polypropylene (15) contact the surface of the object, heated and pressed so that the films of cast polypropylene (15) are weakly adhered to the object and strongly adhered to each other around the object (8) to thereby produce a laminate (17) wherein the object (8) may be removed from the laminate (17) without being harmed and wherein weak and strong adhesion are less than 100g/100mm and respectively more than 200g/100 mm in terms of the exfoliation strength.

## Patentansprüche

1. Verwendung einer mehrlagigen Folie (16) zum Bedecken eines Gegenstandes (8) mit im wesentlichen ebenen Oberflächen, wobei die mehrlagige Folie eine transparente Kunststoffolie (1) und eine Polypropylen-Gießfolie (15) umfaßt, die durch einen Thermoklebstoff verbunden sind, wobei die mehrlagigen Folien (16) dazu ausgelegt sind, auf jeweilige Seiten des Gegenstandes (8) aufgebracht zu werden, derart orientiert zu werden, daß die Polypropylen-Gießfolien (15) die Oberfläche des Gegenstandes berühren, erhitzt und gepreßt zu werden, so daß die Polypropylen-Gießfolien (15) schwach an den Gegenstand geklebt werden und stark aneinander um den Gegenstand (8) geklebt werden, um dadurch ein Laminat (17) zu erzeugen, wobei der Gegenstand (8) von dem Laminat (17) entfernt werden kann, ohne beschädigt zu werden, und wobei die schwache und starke Haftung hinsichtlich der Abblätterungsfestigkeit geringer als 100 g/100 mm bzw. größer als 200 g/100 mm sind.

## Revendications

1. Utilisation d'un film multicouche (16) pour recouvrir un objet (8) ayant des faces globalement plates, le film multicouche comprenant un film plastique transparent (1) et un film de polypropylène coulé (15) joints par un adhésif thermique, dans laquelle les films multicouches (16) sont adaptés pour être appliqués aux côtés respectifs de l'objet (8), orientés de telle sorte que les films de polypropylène coulé (15) sont en contact avec la face de l'objet, chauffés et pressés de telle sorte que les films de polypropylène coulé (15) adhèrent faiblement à l'objet et adhèrent fortement l'un à l'autre autour de l'objet (8) pour ainsi produire un stratifié (17) dans lequel l'objet (8) peut être retiré du stratifié (17) sans être endommagé et dans lequel les adhérences, faibles et fortes, sont respectivement inférieures à 100 g/100 mm et supérieures à 200 g/100 mm en termes de force de décollement.
